Europäisches Patentamt

European Patent Office

Office européen des brevets

(19)

(11) Veröffentlichungsnummer: **0 361 287**

**A2**

(12) **EUROPÄISCHE PATENTANMELDUNG**

(21) Anmeldenummer: 89117338.7

(22) Anmeldetag: 20.09.89

(51) Int. Cl.⁵· **H04B 1/04**

(30) Priorität: 27.09.88 DE 3832666

(43) Veröffentlichungstag der Anmeldung:
04.04.90 Patentblatt 90/14

(84) Benannte Vertragsstaaten:
AT CH DE ES FR GB IT LI NL SE

(71) Anmelder: TELEFUNKEN electronic GmbH
Theresienstrasse 2
D-7100 Heilbronn(DE)

(72) Erfinder: Weber, Hans-Werner
Ziegeleistr. 63
D-8070 Ingolstadt(DE)

(74) Vertreter: Maute, Hans-Jürgen, Dipl.-Ing.
TELEFUNKEN electronic GmbH
Theresienstrasse 2
D-7100 Heilbronn(DE)

(54) **Hochfrequenzsender, insbesondere für Sicherungseinrichtungen.**

(57) Ein Hochfrequenzsender, der insbesondere für Sicherungseinrichtungen geeignet ist, weist einen Oszillator (3), einen Verstärker (4), einen Modulator (7) mit zugeordnetem Codesignalgenerator (11) sowie eine Sendeantenne und Filtereinrichtungen aus. Um dabei eine hohe Nebenwellenunterdrückung zu erreichen, ist zwischen dem Oszillator (3) und dem Verstärker ein auf die Grundfrequenz des Oszillators (3) abgestimmter Bandpaß (4) so wie zwischen dem Ausgang des Verstärkers (5) und dem Hochfrequenzeingang des Modulators (7) ein Tiefpaß geschaltet, dessen Grenzfrequenz auf die Grundfrequenz des Oszillators abgestimmt ist. Der Hochfrequenzausgang des Modulators (7) ist ferner über einen weiteren Tiefpaß (9) mit der Sendeantenne (10) verbunden, wobei dieser weitere Tiefpaß (9) in seiner Grenzfrequenz auf das Mischsignal abgestimmt ist.

FIG.

## Hochfrequenzsender, insbesondere für Sicherungseinrichtungen

Die Erfindung betrifft einen Hochfrequenzsender gemäß dem Oberbegriff des ersten Anspruchs.

Es ist bei Sendern ganz allgemein bekannt, einem Oszillator einen Verstärker nachzuschalten, dessen Ausgangssignal über einen Modulator auf eine Sendeantenne geführt wird. Dabei sind innerhalb des Senderzuges Filtereinrichtungen vorgesehen, um Oberwellen zu unterdrücken. An Sender für Sicherungseinrichtungen, die in dicht besiedelten Gebieten, vorzugsweise in Kaufhäusern und Einzelhandelsgeschäften, zur Anwendung gelangen, werden nach den einschlägigen Vorschriften sehr hohe Anforderungen an Störstrahlungsunterdrückung gestellt.

Der Erfindung liegt die Aufgabe zugrunde, bei einem Sender gemäß dem Oberbegriff des ersten Anspruchs Maßnahmen zu treffen, durch welche eine hohe Nebenwellenunterdrückung erzielt wird.

Die Lösung dieser Aufgabe erfolgt gemäß der Erfindung durch die kennzeichnenden Merkmale des ersten Anspruchs.

Bei einem Aufbau eines Senders gemäß der Erfindung werden durch den zwischen den Oszillator und den Hochfrequenzverstärker geschalteten Bandpaß nicht nur Oberwel len sondern auch subharmonische und andere oberhalb wie unterhalb der Oszillatorgrundfrequenz liegende Störfrequenzen unterdrückt. Der im weitgehend linearen Verstärkungsbereich betriebene Hochfrequenzverstärker erhält somit ein Signal an seinem Eingang, das praktisch nur die Grundfrequenz des Oszillators darstellt. Die aufgrund von unvermeidbaren Nichtlinearitäten im Verstärker entstehenden Verzerrungen, die oberhalb der Oszillatorgrundfrequenz liegende Störfrequenzen nach sich ziehen, werden dann im nachfolgenden Tiefpaß unterdrückt, dessen Grenzfrequenz annähernd der Oszillatorfrequenz entspricht oder geringfügig höher liegt. Der Tiefpaß ist dabei so ausgelegt, daß eine Filterpolstelle die erste Oberwelle des Oszillators unterdrückt. Das leistungsverstärkte Oszillatorsignal wird vom Tiefpaß auf einen Modulator geführt, der als Pin-Diodenmodulator in Brückenschaltung ausgebildet ist und eine weitgehend lineare Mischkennlinie aufweist, sowie hohe Modulationsgrade bei allseitiger Anpassung erlaubt. Das in Form von Impulsfolgen in einem Codesignalgenerator erzeugte Modulationssignal wird im Modulator dem Hochfrequenzsignal aufmoduliert. Dadurch steht für einen dem Sender zugeordneten Empfänger ein Empfangssignal zur Verfügung, für dessen Auswertung ein relativ geringer Aufwand im Empfänger erforderlich ist. Andererseits kann die Sendeleistung des Senders bei gegebener Empfindlichkeit des Empfängers relativ gering gehalten werden, was für batteriebetriebene Sender von erheblicher Bedeutung ist. Das im Modulator durch Mischen mit dem Signal des Codesignalgenerators erzeugte modulierte Hochfrequenzsignal wird im nachfolgenden Tiefpaß, dessen Grenzfrequenz auf das modulierte Hochfrequenzsignal abgestimmt ist, wieder von harmonischen oder oberhalb des gewünschten Nutzsignals liegenden Störschwingungen befreit und über die Sendeantenne abgestrahlt. Unerwünschte Nebenwellen werden durch Filterpolstellen bei diesem Schaltungskonzept zuverlässig unterdrückt. Außerdem kann durch den mit Pin-Dioden bestückten Modulator aufgrund der hohen Amplituden-Modulationsgrade die Sendeleistung für aufmodulierte Impulsfolgen gering gehalten werden.

Die Erfindung ist nachfolgend anhand einer Prinzipschaltung eines Senders näher erläutert.

Eine Sicherungseinrichtung besteht aus einem Sender 1, der vorliegend durch die innerhalb einer strichpunktierten Linie angeordneten Bauelemente realisiert ist, und aus einem angepaßten Empfänger 2. Der Hochfrequenzsendeteil des Senders 1 umfaßt einen Hochfrequenzoszillator 3, dem ein auf die Schwingfrequenz des Oszillators abgestimmter Bandpaß 4 nachgeschaltet ist. Das so insbesondere von harmonischen und subharmonischen oder anderen Störfrequenzen befreite Oszillatorsignal wird danach einem Hochfrequenzverstärker 5 zugeführt, dessen leistungsverstärktes Ausgangssignal auf einen Tiefpaß geführt wird, dessen Grenzfrequenz auf die Oszillatorgrundfrequenz abgestimmt ist. Im Tiefpaß werden dabei Oberschwingungen abgetrennt, welche durch Nichtlinearitäten im Verstärker 5 entstehen können. Nach dem Tiefpaß 6 wird das leistungsverstärkte Hochfrequenzsignal einem Modulator 7 aufgeschaltet, der als Modulationselemente Pin-Dioden enthält und der dadurch sehr hohe Modulationsgrade zuläßt, die bis 100 % reichen können. Dem Modulator 7 wird zusätzlich über eine besondere Leitung 8 ein Codesignalwort zugeführt, das im Modulator 7 dem Hochfrequenzsignal aufmoduliert wird. Das so mit einem Informationsinhalt modulierte Hochfrequenz signal gelangt anschließend über einen weiteren Tiefpaß 9 zu einer Sendeantenne 10. Die Grenzfrequenz des zweiten Tiefpasses 9 ist ebenfalls auf die Oszillatorgrundfrequenz in Verbindung mit dem aufmodulierten Codesignalwort abgestimmt und bedämpft in erheblichem Maße oberhalb des Nutzsignals liegende Frequenzen. Der so aufgebaute eigentliche Sender weist infolge der in den Hochfrequenzsignalzug eingefügten Filterschaltungen 4, 6, 9 eine sehr hohe Nebenwellenunterdrückung auf, so daß den einschlägigen Vorschriften entsprechend keine unzulässigen Störstrahlungen über die Antenne 10 abgestrahlt werden. Dabei bietet der zwischen den Tiefpässen 6, 9 liegende Modulator bei geringer Oberwellenerzeugung und hohem Modulationsgrad eine optimale Ausnutzung des Hochfrequenzsignals, so daß bei relativ geringer Sendeleistung ein wirtschaftlicher Betrieb aus Batterien möglich ist.

Das über die Leitung 8 in den Modulator eingespeiste Modulationssignal ist ein Codesignalwort, das in einem Codesignalgenerator 11 generiert wird. Es besteht vorzugsweise aus einer vorbestimmten Folge von Impulsen einer bestimmten Frequenz, jedoch können die Impulse auch unterschiedliche Breiten oder Amplituden aufweisen. Der Codesignalgenerator 11 ist Teil eines Mikroprozessors 12, der für die Steuerung der Peripherie des Senders programmiert ist.

Innerhalb der Sicherungseinrichtung dient der Sender dazu, bestimmte Empfänger 2 zu erreichen, die nämlich für die Demodulation des jeweils gesendeten Codewortes eingerichtet sind. Zur Identifizierung ist dabei dem Empfänger ein akustischer oder optischer Alarmgeber 13 zugeordnet, so daß ein in den Sendebereich des Senders 1 gelangender angepaßter Empfänger 2 seinen Alarmgeber über einen Decoder in Betrieb setzt, wenn der Sender das zugehörige Alarmsignal ausstrahlt. Wird vom Sender 1 dagegen ein Resetsignal gesendet, dann wird nach entsprechender Demodulation bzw. Decodierung im Decoder der Alarmgeber 13 im angesprochenen Empfänger 2 deaktiviert. Um die dem Alarmsignal bzw. dem Resetsignal entsprechenden Codesignalworte ansteuern zu können, ist dem Sender eine Aktivierungsschalteinheit 14 zugeordnet, die einen manuell betätigbaren Tastenschalter 15 für das Auslösen eines Alarmsignals und einen manuell betätigbaren Tastenschalter 16 für das Auslösen eines Resetsignals ausweist. Durch Betätigen des Alarm-Tastenschalters 15 wird ein Steuersignal an den Codesignalgenerator 11 abgegeben, der daraufhin ein Codesignalwort generiert, welches im Empfänger 2 den Alarmgeber 13 aktiviert. Wird dagegen der Reset-Tastenschalter 16 gedrückt, dann wird der Codesignalgenerator 11 so gesteuert, daß er ein Resetsignal erzeugt, das für das Rücksetzen bzw. Abschalten des Alarmgebers im Empfänger 2 bestimmt ist. Gleichzeitig mit dem Betätigen eines der Tastenschalter 15, 16 wird auch ein Versorgungsstromkreis 17 durch die Aktivierungseinheit 14 durchgeschaltet, so daß der Oszillator 3 und der Verstärker 5 aktiviert werden. Das erzeugte Leistungshochfrequenzsignal wird dann mit dem jeweils über die Tastenschalter 15, 16 ausgewählte Codesignalwort moduliert und über die Sendeantenne 10 ausgestrahlt.

Damit aber der Sender nicht ohne weiteres von jedermann benutzt werden kann, ist dem Mikroprozessor 12 ein Speicher für ein Kennwort zugeordnet, wobei der Speicher beispielsweise aus einer Matrix von wahlweise zu verbindenden Schaltstrecken bestehen kann, welche über den Mikroprozessor abgefragt werden. Über das im Speicher 18 niedergelegte Kennwort wird das Paar von Codesignalworten bestimmt, auf die der Empfänger 2 abgestimmt ist. Zusätzlich dient das Kennwort jedoch auch zur Freigabe der Sendebereitschaft des eigentlichen Senderzuges 3 bis 10, in dem dieses im Speicher 18 festgelegte Kennwort im Mikroprozessor 12 mit einem Paßwort verglichen wird, welches über eine manuell bedienbare Eingabeeinrichtung 19 erzeugt werden kann und über eine Paßwortleitung 20 dem Mikroprozessor 12 zugeführt wird. Die Eingabeeinrichtung 19 umfaßt dabei einen mehrstelligen Schalter 21 über den vom Benutzer ein vorgegebenes Paßwort einzugeben und über eine Quittierungstaste 22 auf die Paßwortleitung 20 zu schalten ist. Der dadurch erzeugte, das Paßwort 20 darstellende Zifferncode versetzt über eine Bereitschaftsleitung 23 auch den Codewortgenerator 11 in Arbeitsbereitschaft. Erst dann kann durch Betätigen der Tastenschalter 15 bzw. 16 der Codewortgenerator 11 unter gleichzeitiger Anschaltung des Oszillators 3 und des Verstärkers 5 an die zugehörige Versorgungsspannung in den Sendezustand versetzt werden.

Um die Sendebereitschaft des Senders 1 automatisch abzuschalten, wenn während einer vorbestimmten Zeit weder ein Alarmsignal noch ein Resetsignal ausgelöst wurde, ist der dem Sender 3 bis 10 zugeordneten Schalteinrichtung 12, 14, 19, vorzugsweise aber dem Mikroprozessor 12 ein Zeitschalter 24 zugeschaltet, der bei jedem Einschalten eines der Codesignalworte, also beim Betätigen eines der Tastenschalter 15, 16, erneut gestartet wird sowie den Versorgungsstromkreis des Senders nach der festgelegten Zeitdauer bleibend abschaltet. Der Sender 1 kann dann nur durch erneutes Eingeben des Paßwortes in Sendebereitschaft versetzt werden.

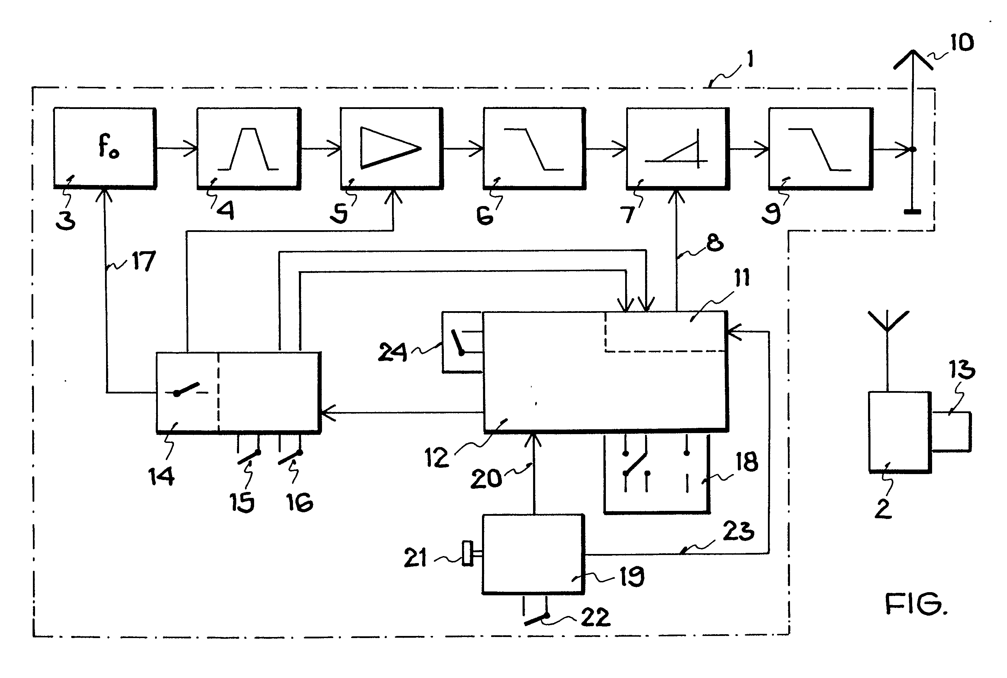

## Ansprüche

1) Hochfrequenzsender, insbesondere für Sicherungseinrichtungen, mit einem Oszillator und einem nachfolgenden Verstärker, mit einem nachgeschalteten Modulator, dem ein Codesignalgenerator zugeordnet ist, mit einer nachfolgenden Sendeantenne sowie mit Filtereinrichtungen, dadurch gekennzeichnet, daß zwischen dem Oszillator (3) und dem Verstärker (5) ein auf die Grundfrequenz des Oszillators (3) abgestimmter Bandpaß (4) geschaltet ist, daß zwischen dem Ausgang des Verstärkers (5) und dem Hochfrequenzeingang des Modulators (7) ein Tiefpaß (6) liegt, dessen Grenzfrequenz auf die Grundfrequenz des Oszillators (3) abgestimmt ist und daß der Hochfrequenzausgang des Modulators (7) über einen weiteren Tiefpaß (9) mit der Sendeantenne (10) verbunden ist, wobei dieser weitere Tiefpaß (9) in seiner Grenzfrequenz auf das Mischsignal abgestimmt ist.

2) Hochfrequenzsender nach Anspruch 1, dadurch gekennzeichnet, daß der Modulator (7) Pin-Dioden als Modulationselemente enthält.

3) Hochfrequenzsender nach Anspruch 1 oder 2, dadurch gekennzeichnet, daß der Codesignalgenerator (11) vorbestimmte Impulsfolgen erzeugt.

FIG.

EP 0 361 287 A2